Europäisches Patentamt

European Patent Office

Office européen des brevets

(11) Veröffentlichungsnummer: **0 358 075 B1**

# EUROPÄISCHE PATENTSCHRIFT

(12)

(45) Veröffentlichungstag der Patentschrift: **15.09.93**

(21) Anmeldenummer: **89115804.0**

(22) Anmeldetag: **26.08.89**

(51) Int. Cl.⁵: **C08G 18/16**, C08G 18/06

(54) Verfahren zur Herstellung von heisshärtenden Polyurethan-Weichformschaumstoffen.

(30) Priorität: **08.09.88 DE 3830454**

(43) Veröffentlichungstag der Anmeldung:
**14.03.90 Patentblatt 90/11**

(45) Bekanntmachung des Hinweises auf die
Patenterteilung:
**15.09.93 Patentblatt 93/37**

(84) Benannte Vertragsstaaten:
**AT BE CH DE ES FR GB IT LI NL SE**

(56) Entgegenhaltungen:
**EP-A- 0 303 105**
**DE-C- 3 830 454**
**GB-A- 2 025 439**
**US-A- 3 479 304**
**US-A- 4 094 827**

(73) Patentinhaber: **BAYER AG**

**D-51368 Leverkusen(DE)**

(72) Erfinder: **Kogelnik, Hans-Joachim, Dr.**
**c/o Mobay Corporation**
**Pittsburgh PA 15205(US)**
Erfinder: **Brock, Martin, Dr.**
**Silesiusstrasse 82**
**D-5000 Köln 80(DE)**
Erfinder: **Hettel, Hans, Dr.**
**Jägerstrasse 20**
**D-5064 Rösrath(DE)**

**Beschreibung**

Heißhärtende Polyurethan-Weichformschaumstoffe finden bekanntlich eine sehr verbreitete Anwendung und werden u.a. im Automobilbereich genutzt. Die Qualität der beim Einsatz als Sitz- bzw. Lehnenpolster üblichen Polyurethan-Weichformschaumstoffe wird weitestgehend von ihrer Rohdichte bestimmt. Unabhängig von der Art der zur Herstellung von Heißformschaumstoffen einsetzbaren Basisrohstoffe (Polyole/Isocyanate) hat sich für die verschiedenen Anwendungen und die damit verbundenen Anforderungen, besonders jedoch hinsichtlich möglichst günstiger Dauergebrauchseigenschaften, ein bestimmtes Rohdichtenniveau für die jeweiligen Anwendungen (Sitz, Bank, Lehne) als zweckmäßig und praxisgerecht erwiesen.

Für die zu erzielende Rohdichte ist hauptsächlich der Wassergehalt der Rohstoffkombination bestimmend, wobei je nach angestrebtem Rohdichtenniveau Wassermengen bis zu 5 (üblicherweise 2,5-3,5) Gew.-Tle. pro 100 Gew.-Tle. Polyol als typisch gelten.

Wie sich gezeigt hat, lassen sich die bei der Formschaumanwendung oftmals aus Gründen einer Gewichts- und Kostenersparnis angestrebten niedrigeren Rohdichten nur in Ausnahmefällen durch Steigerung des Wassergehaltes über die angegebenen Mengen hinaus realisieren. Der Grund dafür liegt in der Tatsache, daß mit zunehmendem Wasseranteil (> 3,5 Gew.-Tle. pro 100 Gew.-Tle. Polyol) die für den Schäumprozeß unerläßliche katalytische Abstimmung der chemischen Reaktionen (Polymerbildung/Gasbildung) schwieriger und der Verarbeitungsspielraum insgesamt stark eingeengt wird. Neben Problemen bezüglich Hautbeschaffenheit (Formentempertur/Trennmittel) und Schaumstabilität resultiert insbesondere auch eine Beeinträchtigung ( = Beschränkung) des Kennzahl-Spielraumes. Aus diesen Gründen werden gewünschte bzw. erforderliche Senkungen der Rohdichte vorzugsweise durch die Mitverwendung physikalisch wirkender Treibmittel (z.B. Halogenkohlenwasserstoffe) verwirklicht. Diese Verfahrensweise ist Stand der Technik und gilt im Prinzip für alle Heißformschaumstoffe. Sie ist jedoch aus ökologischer Sicht und aus Kostengründen nicht zu befürworten.

Überraschend wurde nun gefunden, daß neben dem üblichen Bereich von 1-5 Gew.-Tln. Wasser auch atypisch hohe Wassermengen von mehr als 5,0 Gew.-Tln. pro 100 Gew.-Tle. "Basispolyol" problemlos mit Isocyanaten vorzugsweise vom Typ des Toluylendiisocyanats verarbeitet und als Folge davon bei heißhärtendem Polyurethan Weichformschaum Rohdichten von bis herab zu 15 kg/m$^3$ erreicht werden können, wenn vorzugsweise weniger als 1,0 Gew.-Tle. Kohlensäurediamid bezogen auf 100 Gew.-Tle. "Basispolyol" sowie geringe Mengen - vorzugsweise 0,05-0,25 Gew.-Tle. - eines aminischen Cokatalysators verwendet werden und abweichend vom bislang als praxisüblich geltenden Kennzahlbereich (93-105) eine normalerweise prohibitiv niedrige Kennzahl von weniger als 90 zur Verschäumung geführt wird.

In der US-PS 3 479 304 sind bereits flexible Polyurethanschaumstoffe unter Mitverwendung von Kohlensäurediamid in Mengen von allerdings 1-5 Gew.-Tln., bezogen 100 Gew.-Tle. "Basispolyol" beschrieben. Als Treibmittel wird Wasser in Mengen von 1-5 Gew.-Tln., bezogen auf 100 Gew.-Tle. "Basispolyol", verwendet. Im Gegensatz zur beanspruchten Verfahrensweise werden in der US-PS grundsätzich halogenierte Isocyanate vom Typ des Toluylendiisocyanates eingesetzt. Die erfindungsgemäß hergestellten Polyurethan-Weichformschaumstoffe erfordern neben dem beschriebenen Kohlensäurediamid und den für Heißformschaum üblichen organischen Zinn-Katalysator einen aminischen, vorzugsweise tertiären Cokatalysator. Die Kombination eines organischen Zinn-Katalysators mit einem tertiären Amin schließt die US-PS grundsätzlich aus.

Der angegebene Kennzahlbereich liegt im Gegensatz zum beanspruchten Verfahren (Kennzahl unter 90) zwischen 90 und 120. Hierbei handelt es sich zudem nicht um die Verfahrensweise der Schäumung in geschlossenen Formen, die sich in den Verarbeitungsbedingungen und den resultierenden physikalischen Eigenschaften der hergestellten PU-Schaumstoffe deutlich von der in offenen Formen geschäumten Produkten (Freischaum) unterscheidet.

Gegenstand dieser Erfindung ist ein Verfahren zur Herstellung von heißhartenden Polyurethan-Weichformschaumstoffen durch Umsetzung von

a) Polyisocyanaten mit
b) Verbindungen mit mindestens zwei gegenüber Isocyanaten aktiven Wasserstoffatomen vom Molekulargewicht 400-10 000 und gegebenenfalls
c) Kettenverlängerungs- und Vernetzungsmitteln mit mindestens zwei gegenüber Isocyanaten aktiven Wasserstoffatomen vom Molekulargewicht 32-399 in Gegenwart von
d) Kohlensäurediamid als Katalysator, eines für die Heißhärtung üblichen Zinnkatalysators und eines aminischen Co-Katalysators,
e) Wasser als Treibmittel und gegebenenfalls in Gegenwart von

f) anderen Treibmitteln, Katalysatoren und weiteren an sich bekannten Hilfs- und Zusatzmitteln in einer geschlossenen Form, das dadurch gekennzeichnet ist, daß

1. als Polyisocyanate a) einzeln oder in Mischung miteinander gegebenenfalls alkylsubstituierte Diphenylmethandiisocyanate, Polyphenylpolymethylenpolyisocyanate, Toluylendiisocyanat, Hexamethylendiisocyanat, Isophorondiisocyanat sowie durch Carbodiimidgruppen, Urethangruppen, Allophanatgruppen, Isocyanuratgruppen, Harnstoffgruppen und Biuretgruppen modifizierte Polyisocyanate, die sich von 2,4- und/oder 2,6-Toluylendiisocyanat bzw. von 4,4'-und/oder 2,4'-Diphenylmethandiisocyanat und/oder Hexamethylendiisocyanat und/oder Isophorondiisocyanat ableiten und

2. Kohlensäurediamid als Katalysator in einer Menge von 0,05 bis 1,0 Gew.-Tln., vorzugsweise von 0,3 bis 0,7 Gew.-Tlen., bezogen auf 100 Gew.-Tle der Komponente b) und

3. Wasser als Treibmittel d) in einer Menge von 5 bis 15 Gew.-Teilen, bezogen auf 100 Gew.-Teilen der Komponente b)

verwendet werden, wobei

4. die Umsetzung aller Komponenten bei einer Kennzahl von unter 90, vorzugweise 75-85, durchgeführt wird.

Zur Herstellung der Polyurethan-Weichformschaumstoffe werden erfindungsgemäß als Ausgangskomponenten verwendet:

1. die oben genannten Polyisocyanate.

Als erfindungsgemäß einzusetzende Polyisocyanate kommen vorzugsweise folgende TDI-Typen in Betracht:

- Toluylendiisocyanat als Gemisch der 2,4- und 2,6-Isomeren im Verhältnis 80:20 (T 80)
- Toluylendiisocyanat als Gemisch der 2,4- und 2,6-Isomeren im Verhältnis 65:35 (T 65)
- Toluylendiisocyanat-Prepolymere
- Abmischungen von TDI mit Diphenylmethandiisocyanat und/oder Polyphenylpolymethylen-polyisocyanaten.

2. Verbindungen mit mindestens zwei gegenüber Isocyanaten reaktionsfähigen Wasserstoffatomen von einem Molekulargewicht in der Regel von 400-10 000. Hierunter versteht man neben Aminogruppen, Thiolgruppen oder Carboxylgruppen aufweisenden Verbindungen, vorzugsweise Hydroxylgruppen aufweisende Verbindungen; insbesondere zwei bis acht Hydroxlgruppen aufweisende Verbindungen, speziell solche vom Molekulargewicht 1000 bis 6000, vorzugsweise 2000 bis 6000, z.B. mindestens zwei, in der Regel zwei bis acht, vorzugsweise aber 2 bis 6, Hydroxylgruppen aufweisende Polyether, Polyester, Polycarbonate und Polyesteramide, wie sie für die Herstellung von homogenen und von zellförmigen Polyurethanen an sich bekannt sind und wie sie z.B. in der DE-OS 2 832 253, Seiten 11-18, beschrieben werden. Vorzugsweise weisen sie eine OH-Zahl von 28 bis 56 auf.

3. Gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionfähige Wasserstoffatome auf. Beispiele hierfür werden in der DE-OS 2 832 253, Seiten 10-20, beschrieben.

4. Kohlensäurediamid (Harnstoff) in einer Menge von 0,05 Gew.-Tlen bis zu 1,0 Gew.-Teil pro 100 Gew.-Teile "Basispolyol" b). Ferner wird erfindungsgemäß ein für die Heißhärtung üblicher Zinnkatalysator und ein aminischer Co-Katalysator verwendet.

5. Wasser als Treibmittel in einer Menge von 5 bis 15 Gew.-Tln. pro 100 Gew.-Teile "Basispolyol" b)

6. Gegebenenfalls Hilfs- und Zusatzmittel wie

a) leicht flüchtige organische Substanzen als weitere Treibmittel,

b) Reaktionsbeschleuniger und Reaktionsverzögerer der an sich bekannten Art in den an sich üblichen Mengen,

c) oberflächenaktive Zusatzstoffe, wie Emulgatoren und Schaumstabilisatoren, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistatisch und bakteriostatische wirkende Substanzen sowie Füllstoffe wie Bariumsulfat, Kieselgur, Riß oder Schlämmkreide.

Diese gegebenenfalls mitzuverwendenden Hilfs- und Zusatzstoffe werden beispielsweise in der DE-OS 2 732 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögeren, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des erfindungsgemäßen Verfahrens:
Die Reaktionskomponenten werden erfindungsgemäß nach dem an sich bekannten Elnstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121-205, beschrieben.

Die Umsetzung aller Komponenten erfolgt erfindungsgemäß bei einer Kennzahl unter 90, vorzugsweise bei einer Kennzahl von 75-85.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Die theoretische Isocyanatmenge berechnet sich aus der vollständigen Reaktion aller möglicher reaktiver funktionellen Gruppen mit dem jeweiligen Isocyanat. Mit Hilfe der Kennzahl ist es also möglich, den Grad der Unter- oder Übervernetzung näher zu definieren. Die Kennzahl errechnet sich nach der allgemeinen Formel wie folgt:

$$\textbf{Kennzahl} = \frac{\textbf{Isocyanatmenge}_{\textbf{(praktisch)}} \times \textbf{100}}{\textbf{Isocyanatmenge}_{\textbf{(theoretisch)}}}$$

Erfindungsgemäß wird die Verschäumung in geschlossenen Formen durchgeführt. Dabei wird das Reaktionsgemisch in eine Form eingetragen. Als Formmaterial kommt Metall, z.B. Aluminium oder Eisenblech infrage. In der Form schäumt das schäumfähige Reaktionsgemisch auf und bildet den Formkörper. Die ausgeschäumte Form wird in einem Ofen bei Temperaturen über 100°C ausgeheizt.

Erfindungsgemäß kann man in diesem Zusammenhang so vorgehen, daß man in die Form so viel schaumfähiges Reaktionsgemisch einträgt, daß der gebildete Schaumstoff die Form ausfüllt. Man kann aber auch so arbeiten, daß man mehr schaumfähiges Reaktionsgemisch in die Form einträgt, als zur Auffüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Die erfindungsgemäß erhältlichen Polyurethan-Weichformschaumstoffe finden z.B. Anwendung als Liege- und Sitzmöbel, sowie für Sitze und Lehnen in Verkehrsmitteln, vorzugsweise im Automobil.

Beispiele

Die Herstellung der erfindungsgemäßen Weichformschaumstoffe erfolgt durch intensives Vermischen der nachgenannten Rezepturbestandteile und Einbringung dieses reaktionsfähigen Gemisches in eine allseitig verschließbare Form.

Die Mengenangaben in allen Tabellen sind Gewichts-Teile.

| | |
|---|---|
| Polyether A: | trifunktioneller langkettiger PO/EO-Polyether (ca. 5 % EO/OHZ = 56) |
| Polyether B: | trifunktioneller langkettiger PO/EO-Polyether (Ca. 14 % EO/OHZ = 56) |
| Polyether C: | trifunktioneller langkettiger PO/EO-Polyether (Ca. 18 % EO/OHZ = 35) mit ca. 20 % organischem Füllstoff |
| Katalysator 1: | Kohlensäurediamid (Harnstoff) |
| Katalysator 2: | N,N-Dimethylethanolamin |
| Katalysator 3: | Bis-(2-dimethylaminoethyl-)ether 70 %ig in Dipropylenglykol |
| Katalysator 4: | Triethylendiamin , 33 %ig in Dipropylenglyol |

| | |
|---|---|
| Katalysator 5: | Zinn(II)-(2-ethyl-hexoat) |
| Tegostab® B 4900: | Handelsprodukt der TH-Goldschmidt AG |
| Tegostab® B 8002: | Handelsprodukt der TH-Goldschmidt AG |
| Isocyanat Y: | Toluylendiisocyanat als Gemisch der 2,4- und 2,6-Isomeren im Verhältnis 65:35 (T 65) / NCO = 48,3 |
| Isocyanat Z: | Toluylendiisocyanat als Gemisch der 2,4- und 2,6-Isomeren im Verhältnis 80:20 (T 80) / NCO = 48,3 |

**Patentansprüche**

| Beispiele | 1 | 2 | 3 | 4 | 5 | 6 | 7 | 8 (Vergleich) |
|---|---|---|---|---|---|---|---|---|
| Polyether A | – | – | – | – | – | 100 | – | – |
| Polyether B | 100 | 100 | 100 | 100 | 100 | – | 100 | 70 |
| Polyether C | – | – | – | – | – | – | – | 30 |
| Wasser | 5,0 | 7,0 | 6,5 | 6,5 | 5,5 | 8,0 | 6,0 | 7,5 |
| Katalysator 1 | 0,7 | 0,7 | 0,5 | 0,7 | 0,5 | 0,7 | 0,3 | – |
| Katalysator 2 | – | – | – | 0,2 | – | – | – | 0,1 |
| Katalysator 3 | 0,15 | 0,1 | 0,15 | – | – | – | 0,1 | – |
| Katalysator 4 | – | – | – | – | 0,1 | 0,1 | – | – |
| Katalysator 5 | 0,07 | 0,07 | 0,11 | 0,08 | 0,07 | 0,10 | 0,16 | 0,08 |
| Tegostab® B 4900 | 1,0 | 1,3 | 1,5 | – | – | – | – | 1,5 |
| Tegostab® B 8002 | – | – | – | 1,5 | 1,3 | 1,5 | 1,5 | – |
| Isocyanat Y | – | – | – | – | – | – | 30 | – |
| Isocyanat Z | + | + | + | + | + | + | 70 | + |
| Kennzahl | 89 | 80 | 85 | 80 | 85 | 75 | 85 | 89 |

1. Verfahren zur Herstellung von geruchsarmen heißhärtenden Polyurethan-Weichformschaumstoffen durch Umsetzung von
a) Polyisocyanaten mit

| | | 1 | 2 | 3 | 4 | 5 | 6 | 7 | 8 (Vergleich) |
|---|---|---|---|---|---|---|---|---|---|
| Rohdichte | (kg/m³) | 29 | 23 | 18 | 22 | 22 | 22 | 22 | 20 |
| Stauchhärte 40 % | (kPa) | 4.0 | 2,6 | 3,0 | 3,5 | 3,6 | 3,6 | 3,3 | 4,4 |
| Zugfestigkeit | (kPa) | 113 | 122 | 122 | 104 | 109 | 107 | 115 | 94 |
| Bruchdehnung | (%) | 115 | 193 | 190 | 127 | 161 | 121 | 152 | 87 |
| Druckverformungsrest 50 % | (%) | 4.2 | 4,1 | 6,1 | 8,3 | 5,0 | 9,9 | 9,9 | 13,9 |

b) Verbindungen mit mindestens zwei gegenüber Isocyanaten aktiven Wasserstoffatomen von Molekulargewicht 400 bis 10 000 und gegebenenfalls

c) Kettenverlängerungs- und Vernetzungsmitteln mit mindestens zwei gegenüber Isocyanaten aktiven Wasserstoffatomen vom Molekulargewicht 32-399 in Gegenwart von

d) Kohlensäurediamid als Katalysator, eines für die Heißhärtung üblichen Zinnkatalysators und eines aminischen Co-Katalysators,

e) Wasser als Treibmittel und gegebenenfalls in Gegenwart von

f) anderen Treibmitteln, Katalysatoren und weiteren an sich bekannten Hilfs- und Zusatzmitteln in einer geschlossenen Form, dadurch gekennzeichnet, daß

1. als Polyisocyanate a) einzeln oder in Mischung miteinander gegebenenfalls alkylsubstituierte Diphenylmethandiisocyanate, Polyphenylpolymethylenpolyisocyanate, Toluylendiisocyanat, Hexamethylendiisocyanat, Isophorondiisocyanat sowie durch Carbodiimidgruppen, Urethangruppen, Allophanatgruppen, Isocyanuratgruppen, Harnstoffgruppen und Biuretgruppen modifizierte Polyisocyanate, die sich von 2,4- und/oder 2,6-Toluylendiisocyanat bzw. von 4,4'-und/oder 2,4'-Diphenylmethandiisocyanat und/oder Hexamethylendiisocyanat und/oder Isophorondiisocyanat ableiten und

2. Kohlensäurediamid als Katalysator d) in einer Menge 0,05 bis zu 1,0 Gew.-Tln. vorzugsweise 0,3-0,7 Gew.-Tln., bezogen auf 100 Gew.-Tle. der Komponente b) und

3. Wasser als Treibmittel e) in einer Menge von 5 bis 15 Gew.-Tln., bezogen auf 100 Gew.-Tle. der Komponente b)

verwendet werden, wobei

4. die Umsetzung aller Komponenten bei einer Kennzahl von unter 90, vorzugsweise 75-85, durchgeführt wird.

## Claims

**1.** Process for the production of relatively odourless heat curable flexible polyurethane foam mouldings by the reaction of

a) polyisocyanates with

b) compounds in the molecular weight range of from 400 to 10,000 containing at least two isocyanate reactive hydrogen atoms and optionally

c) chain lengthening and cross-linking agents in the molecular weight range of from 32-399 containing at least two isocyanate reactive hydrogen atoms, in the presence of

d) carbonic acid diamide as catalyst, a tin catalyst conventionally used for heat curing and an aminic cocatalyst,

e) water as blowing agent, and optionally in the presence of

f) other blowing agents, catalysts and other auxiliary agents and additives known per se

in a closed mould, characterised in that

1. the polyisocyanates a) used singly or as mixtures with one another are optionally alkyl substituted diphenylmethane diisocyanates, polyphenyl polymethylene polyisocyanates, tolylene diisocyanate, hexamethylene diisocyanate, isophorone diisocyanate and polyisocyanates which are derived from 2,4- and/or 2,6-tolylene diisocyanate or from 4,4'- and/or 2,4'-diphenylmethane diisocyanate and/or hexamethylene diisocyanate and/or isophorone diisocyanate and are modified by carbodiimide groups, urethane groups, allophanate groups, isocyanurate groups, urea groups and biuret groups, and

2. carbonic acid diamide is used as catalyst d) in a quantity of from 0.05 to 1.0 parts by weight, preferably from 0.3 to 0.7 parts by weight, based on 100 parts by weight of component b), and

3. water is used as blowing agent e) in a quantity of from 5 to 15 parts by weight, based on 100 parts by weight of component b),

4. the reaction of all the components being carried out at an index below 90, preferably 75-85.

## Revendications

**1.** Procédé pour la préparation de produits moulés de mousse souple de polyuréthane durcissable à chaud peu odoriférants par la mise en réaction :

a) de polyisocyanates avec

b) des composés contenant au moins 2 atomes d'hydrogène actifs vis-à-vis des isocyanates, ayant un poids moléculaire de 400-10.000 et éventuellement

8

c) des agents d'allongement de chaînes et de réticulation contenant au moins 2 atomes d'hydrogène actifs vis-à-vis des isocyanates, ayant un poids moléculaire de 32-399, en présence

d) de diamide de l'acide carbonique comme catalyseur, d'un catalyseur d'étain habituel pour le durcissage à chaud et d'un cocatalyseur aminé,

e) d'eau comme agent moussant, et éventuellement en présence

f) d'autres agents moussants, d'autres catalyseurs, ainsi que des agents auxiliaires et des additifs supplémentaires connus en soi,

dans un moule fermé, qui se caractérise par le fait qu'on utilise

1. comme polyisocyanates a), individuellement ou en mélange mutuel, des diphénylméthanediiso-cyanates éventuellement substitués par un groupe alkyle, des polyphénylpolyméthylènepolyisocya-nates, le toluylènediisocyanate, l'hexaméthylènediisocyanate, l'isophoronediisocyanate, ainsi que des polyisocyanates modifiés par des groupes carbodiimide, par des groupes uréthanne, par des groupes allophanate, par des groupes isocyanurate, par des groupes urée et par des groupes biuret, qui dérivent du 2,4- et/ou 2,6-toluylènediisocyanate ou du 4,4'- et/ou 2,4'-diphénylméthanediisocya-nate et/ou de l'hexaméthylènediisocyanate et/ou de l'isophoronediisocyanate, et

2. le diamide de l'acide carbonique comme catalyseur d) en une quantité de 0,05 à 1,0 partie en poids, de préférence de 0,3 à 0,7 partie en poids, rapportée à 100 parties en poids du composant b) et

3. de l'eau comme agent moussant e) en une quantité de 5 à 15 parties en poids, rapportée à 100 parties en poids du composant b)

dans lequel

4. on effectue la réaction de tous les composants avec un indice inférieur à 90, de préférence de 75-85.